# EUROPÄISCHE PATENTSCHRIFT

(11) **EP 0 568 918 B1**
(45) Veröffentlichungstag und Bekanntmachung des Hinweises auf die Patenterteilung: **13.12.1995**
(21) Anmeldenummer: 93106904.1
(22) Anmeldetag: 28.04.1993
(51) Int. Cl.: C01B 31/02

(54) **Abtrennung von Fullerenen**
Separation of fullerenes
Séparation de fullerènes

(30) Priorität: 06.05.1992 DE 4214980
(43) Veröffentlichungstag der Anmeldung: 10.11.1993
(73) Patentinhaber: HOECHST AKTIENGESELLSCHAFT, 65926 Frankfurt am Main (DE)
(72) Erfinder: Müller, Wolfgang, Dr., W-6200 Wiesbaden (DE); Wirth, Uwe, Dr., W-6451 Mainhausen (DE); Semel, Joachim, Dr., W-6239 Eppstein/Ts. (DE)

(56) Entgegenhaltungen:
- 'Acs Symposium Series 481 : "Fullerenes"' 1992 , AMERICAN CHEMICAL SOCIETY , WASHINGTON,DC,US
- NATURE Bd. 347, Nr. 6291, 27. September 1990, LONDON GB Seiten 354 - 358 W. KRAETSCHMER ET AL.
- IBM TECHNICAL DISCLOSURE BULLETIN Bd. 34, Nr. 4B, September 1991, NEW YORK US Seite 222 ANONYMOUS

## Beschreibung

Die Erfindung betrifft die Abtrennung Von Fullerenen (C₆₀/C₇₀) aus fullerenhaltigem Ruß.

Das Abtrennen von Fullerenen aus Ruß, der durch Verdampfen von Reinstgraphit-Elektroden erzeugt wurde, ist aus "Nature, Vol. 347,1990, Seite 354 ff." bekannt. Danach wird der Ruß im Vakuum oder in einer inerten Atmosphäre auf 400°C erhitzt und das flüchtige Fullerene kondensiert. Diese Sublimationsmethode hat den Nachteil, daß wegen der schlechten Wärmeleitfähigkeit des Rußes das Verdampfen der Fullerene durch übliche Methoden sehr zeitaufwendig ist. Außerdem besteht die Gefahr, daß die Fullerene sich zersetzen, wenn der fullerenhaltige Ruß längere Zeit auf hohen Temperaturen gehalten wird. Hier will die Erfindung Abhilfe schaffen.

Die Aufgabe wird dadurch gelöst, daß der fullerenhaltige Ruß mittels Mikrowellen auf 350 bis 800°C erhitzt wird und die verdampfenden Fullerene kondensiert werden.

Der Ruß kann mit und ohne Inertgas unter Atmosphärendruck oder bei vermindertem Druck ≦1000 mbar erhitzt werden. Das Erhitzen des Rußes kann durch Mikrowellen mit einer Frequenz von 433 - 24125 MHz erfolgen.

Der Vorteil der Erfindung ist im wesentlichen darin zu sehen, daß fullerenhaltiger Ruß sehr gut mit dem Mikrowellenfeld koppelt und die Verdampfungstemperatur innerhalb weniger Sekunden erreicht wird. Ferner werden reine Fullerene beziehungsweise Mischungen aus Fullerenen durch Mikrowellen nicht erhitzt.

Im folgenden wird die Erfindung anhand eines Beispiels näher erläutert:
In einem handelsüblichen Labormikrowellengerät vom Typ MLS 1200 der Firma Büchi GmbH, D-7320 Göppingen wird in einem Quarzglasrohr (Länge: 230mm;
Innendurchmesser: 50mm) fullerenhaltiger Ruß mittels Mikrowellen (800 Watt) auf 520°C erhitzt. Nach 15 Sekunden dampfen braune Nebel aus dem Ruß aus und kondensieren an der Wand des Quarzglasrohres.
Die HPLC Analyse ergibt circa 75% C₆₀ und circa 25% C₇₀ im Kondensat.

Bei den Versuchen hat sich gezeigt, daß das Verhältnis C₆₀ zu C₇₀ im Kondensat durch Ändern der Mikrowellenleistung beeinflußt werden kann. Bei der Vakuumsublimation kann von Vorteil sein, die Kondensationsflächen (Gefäßwände) zu kühlen. Als Schutzgase kommen unter anderem Stickstoff, Helium, Argon und der gleichen in Betracht.

## Patentansprüche

1. Abtrennung von Fullerenen aus fullerenhaltigem Ruß, dadurch gekennzeichnet, daß der Ruß mittels Mikrowellen auf 300 bis 800°C erhitzt wird und die verdampfenden Fullerene kondensiert werden.

2. Abtrennung von Fullerenen nach Anspruch 1, dadurch gekennzeichnet, daß der Ruß in einem Schutzgas unter Atmosphärendruck erhitzt wird.

3. Abtrennung von Fullerenen nach Anspruch 1, dadurch gekennzeichnet, daß der Ruß bei Drücken ≦1000 mbar erhitzt wird.

4. Abtrennung von Fullerenen nach Anspruch 1, dadurch gekennzeichnet, daß der Ruß mittels Mikrowellen mit einer Frequenz von 433 bis 24125 MHz erhitzt wird.

## Claims

1. The isolation of fullerenes from fullerene-containing soot, which comprises heating the soot by means of microwaves to from 300 to 800°C and condensing the evaporating fullerenes.

2. The isolation of fullerenes as claimed in claim 1 which comprises heating the soot in a protective gas under atmospheric pressure.

3. The isolation of fullerenes as claimed in claim 1, which comprises heating the soot at pressures ≦ 1000 mbar.

4. The isolation of fullerenes as claimed in claim 1, which comprises heating the soot by means of microwaves having a frequency of from 433 to 24125 MHz.

## Revendications

1. Extraction de fullerènes de la suie contenant des fullerènes caractérisée en ce qu'on chauffe la suie à l'aide de microondes à 300 à 800°C et on condense les fullerènes en cours de vaporisation;

2. Extraction de fullerènes selon la revendication 1, caractérisée en ce qu'on chauffe la suie sous une atmosphère de gaz protecteur à la pression atmosphérique.

3. Extraction dde fullerènes selon la revendication 1, caractérisée en ce qu'on chauffe la suie sous une pression ≦1000 mbars.

4. Extraction de fullerènes selon la revendication 1, caractérisée en ce qu'on chauffe la suie à l'aide de microondes ayant une fréquence de 433 à 24125 MHz.
